(19) Europäisches Patentamt
European Patent Office
Office européen des brevets

(11) Numéro de publication: **0 172 056**
**B1**

(12) # FASCICULE DE BREVET EUROPÉEN

(45) Date de publication du fascicule du brevet: **14.12.88**

(51) Int. Cl.⁴: **C 10 G 1/04**

(21) Numéro de dépôt: **85401325.7**

(22) Date de dépôt: **28.06.85**

(54) **Procédé et dispositif utilisables notamment pour laver et désorber des produits solides contenant des hydrocarbures.**

(30) Priorité: **04.07.84 FR 8410730**

(43) Date de publication de la demande: **19.02.86 Bulletin 86/8**

(45) Mention de la délivrance du brevet: **14.12.88 Bulletin 88/50**

(84) Etats contractants désignés: **BE DE GB IT NL**

(56) Documents cité:
**EP-A-0 034 896**
**CA-A-970 310**
**CA-A-1 152 918**
**GB-A-2 084 179**

(73) Titulaire: **INSTITUT FRANCAIS DU PETROLE, 4, Avenue de Bois- Préau, F-92502 Rueil- Malmaison (FR)**
Titulaire: **LABORATOIRE CENTRAL DES PONTS ET CHAUSSEES, 58, boulevard Lefebvre, F-75732 Paris Cedex 15 (FR)**

(72) Inventeur: **Belluteau, Jean- Pierre, 41, Chemin de la Source, F-78590 Noisy Le Roi (FR)**
Inventeur: **Bocard, Christian, 22, avenue du Maréchal Foch, F-78630 Orgeval (FR)**
Inventeur: **Such, Christian, 79, rue Aristide Briand, F-91400 Orsay (FR)**
Inventeur: **Vaillant, Daniel, 12, allée des Platanes, F-91160 Antony (FR)**

(74) Mandataire: **Aubel, Pierre, Institut Français du Pétrole Département Brevets 4, avenue de Bois Préau, F-92502 Rueil- Malmaison (FR)**

**EP 0 172 056 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1988

## Description

La présente invention concerne un procédé et un dispositif utilisables notamment pour le déshuilage de sables et graviers contaminés par des hydrocarbures. Elle peut s'appliquer au traitement industriel visant à l'extraction d'hydrocarbures lourds, par exemple à partir de sables bitumineux, au lavage de produits solides imprégnés de substances indésirables tels que le lavage de sables et de sédiments contaminés par des hydrocarbures que ce soit de façon chronique ou à la suite d'un épandage accidentel de produits pétroliers ayant entrainé la pollution de plages de sable.

Dans ce dernier cas, en particulier, le procédé selon l'invention peut être mis en oeuvre dans une installation transportable sur plateau mobile utilisée sur le site même. Dans l'installation, le sable pollué est mis en contact avec un liquide dissolvant les hydrocarbures ou favorisant leur désorption du sable.

Divers procédés pour atteindre un tel objectif ont été décrits antérieurement. On citera par exemple l'association d'une cellule d'attrition et d'une cellule de flottation pour nettoyer des plages polluées par des hydrocarbures ("Froth flotation cleanup of oil-contaminated beaches", G.D. GUMTZ, T.P. MELOY, Proceedings of the Conference on Prevention and Control of Oil Spills, American Petroleum Institute, Washington D.C., 1971).

Le brevet U.S. 4 132 010 décrit un appareil mobile de lavage de sable constitué par un plateau perforé dont le mouvement assure le déplacement de la couche de sable soumise à des jets de vapeur entrainant les hydrocarbures.

D'autres brevets décrivent des systèmes permettant la récupération de résidus hydrocarbonés à partir de sables bitumineux, au moyen par exemple d'une cellule d'attrition dans laquelle les hydrocarbures sont extraits à l'aide d'un solvant (brevet U.S. 4 096 057) ou en utilisant une cellule d'abrasion contenant de l'eau additionnée de solvant dans laquelle le sable circule verticalement (brevet U.S 4 110 195).

On citera encore une technique de lavage de sables grossiers et graviers pollués par des hydrocarbures dans laquelle le matériau pollué est prémélangé avec du kérosène dans un appareil du type bétonnière, puis envoyé sur une vis sans fin. C'est là que s'effectuent le lavage à l'eau et la séparation des phases solide et liquide ("The Warren Spring Laboratory beach material washing plant for shoreline cleanup", P.R. MORRIS, D. TOOKEY, T. WALSH, Proceedings of the 1983 Oil Spill Conference, American Petroleum Institute, Washington D.C. 1983). Cependant ce procédé antérieur ne permet pas de traiter des sables fins.

Pour illustrer l'art antérieur on peut également citer les brevets EP-A-34896, CA-A-1 152 918, CA-A-970 310 et GB-A-2 084 179.

Les problèmes restant à résoudre sont les suivants:

Le procédé doit traiter tous types de sédiments constitués par exemple de graviers et de sables notamment de sables fins, pollués par des hydrocarbures, frais ou qui ont vieilli, c'est-à-dire qui ont subi un processus d'oxydation et qui sont fortement adsorbés sur le support minéral. Cependant, l'installation mettant en oeuvre le procédé doit être facilement montable, transportable et capable d'assurer le lavage et la désorption en continu des sédiments pollués. C'est l'objet de la présente invention.

Elle concerne un procédé utilisable pour laver des produits solides constitués de mélanges de granulométrie hétérogène imprégnés de substances indésirables, tels qu'un mélange de sable et graviers contenant des hydrocarbures, comportant le lavage de ces produits par une phase liquide capable de désorber ces hydrocarbures; ce procédé en outre, comprend la combinaison des étapes suivantes:

a) on met en contact ces produits avec une phase liquide contenant une solution désorbante pour former un mélange constitué par la solution, les hydrocarbures désorbés et les produits lavés,

b) on élimine les graviers lavés dudit mélange,

c) on effectue au moins une étape de séparation notamment par cyclonage sur ledit mélange débarrassé des graviers, cette séparation délivrant une surverse qui comporte au moins la majeure partie des hydrocarbures et une sousverse qui comporte au moins la majeure partie du sable lavé, et

d) on sépare la surverse par décantation et on récupère d'une part les hydrocarbures et d'autre part une phase aqueuse

et en ce que l'on utilise comme phase liquide désorbante une compositon comprenant de l'eau additionnée d'un produit de lavage dans une proportion de 0,5 à 5 % et de préférence de 1 à 3 % en poids par rapport au sable et d'un agent alcalin de 0,1 à 5 % et de préférence de 1 à 3 % en poids par rapport au sable.

Il peut être avantageux de soumettre la sousverse de l'étape c) à une seconde étape de séparation notamment par cyclonage et l'on recueille alors, une deuxième surverse qui est réintroduite avec le mélange résultant de l'étabe b), ainsi qu'une deuxième sousverse dont on récupère le sable lavé et une phase aqueuse deshuilée que l'on ajoute à la sousverse de l'étape c).

Il est possible, de plus, d'envoyer le mélange résultant de l'étape b) dans une première cuve où il est dilué par une partie au moins de la sousverse de l'étape c), et/ou par une partie au moins de la deuxième surverse et/ou par une partie au moins de la phase aqueuse de l'étape d).

Par ailleurs, la sousverse de l'étape c) peut être envoyée dans une deuxième cuve où elle est diluée par une partie au moins de l'eau déshuilée de la deuxième sousverse et/ou une partie au moins de la phase aqueuse de l'étape d).

L'invention concerne aussi un dispositif de mise en oeuvre du procédé qui comporte en combinaison:

- un organe malaxeur débourbeur pour laver et désorber des produits solides contenant des hydrocarbures, se

prolongeant par un moyen de tamisage ayant une première sortie pour éliminer les graviers lavés et une seconde sortie pour récupérer ledit mélange lavé et désorbé qui est débarrassé des graviers,

- au moins un organe de séparation, ayant un orifice d'entrée connecté à la seconde sortie dudit moyen de tamisage pour délivrer par un premier orifice de sortie une surverse qui comporte au moins la majeure partie des hydrocarbures et par un second orifice de sortie, une sousverse qui comporte au moins la majeure partie du sable lavé, et
- un moyen de décantation relié au premier orifice de sortie dudit organe de séparation pour décanter la surverse et récupérer d'une part les hydrocarbures surnageants et floculés et d'autre part la phase aqueuse.

L'invention concerne enfin une composition pour désorber des produits solides contenant des hydrocarbures, cette composition comprenant de 71 à 99,9 % d'eau, de 0,05 % à 17 % de solvant d'hydrocarbures, de 0,03 à 8 % d'un tensioactif oxyalkylé d'amines ou diamines et de 0,02 à 16 % d'un agent alcalin.

L'invention sera mieux comprise au vu d'un schéma illustrant le procédé et sa mise en oeuvre et qui est annexé ci-dessous.

Selon l'invention, le sable pollué est introduit en continu, par une bande transporteuse 1 ou tout autre système d'élévation de matériaux en continu, à une extrémité d'une unité de lavage et de désorption constituée par un organe malaxeur-débourbeur 2 qui peut être un tube tournant autour de son axe horizontal et muni de pales fixées sur la paroi assurant le brassage et l'avancement du matériau vers l'autre extrémité.

La phase liquide désorbante qui dilue et lave en même temps peut être de l'eau douce, de l'eau salée (eau de mer par exemple) ou un mélange d'eaux douce et salée. On verra par la suite qu'elle peut également être de l'eau chaude, éventuellement additionnée d'un produit de lavage et d'un agent alcalin favorisant la désorption. Cette phase liquide désorbante est introduite dans l'organe malaxeur- débourbeur 2 avec le sable, dans un rapport pondéral eau/sable compris entre 0,25 et 5 et de préférence entre 0,5 et 2.

L'extrémité en sortie de l'organe malaxeur 2 est muni d'un moyen de tamisage 3, par exemple un trommel; il assure par une première sortie 3a l'élimination du mélange eau-sable, des graviers lavés dont la granulométrie est supérieure à la valeur-limite compatible avec le fonctionnement des éléments situés en aval de l'appareillage appliquant le procédé selon l'invention; cette limite est en général de 25 mm.

Le mélange eau-sable s'écoulant du trommel 3 par une seconde sortie 3b est recueilli dans une première cuve 4 où il est dilué par la phase aqueuse de surverse de l'hydrocyclone (9) (voir plus loin). L'ensemble est envoyé par la pompe 5 de la troisième sortie 4a de la première cuve 4 dans l'hydrocyclone (6) muni d'une entrée 6a.

Ces deux hydrocyclones 6 et 9 ou cylones constituent le premier et le second organe de séparation qui effectuent une opération dite de cyclonage mais il peut être fait appel à d'autres organes de séparation, par exemple par centrifugation.

La surverse de l'hydrocyclone (6) comprenant de l'eau contenant la plus grande partie des hydrocarbures désorbés du sable ainsi qu'un faible pourcentage de fines particules du sable éventuellement, est envoyée par un premier trou de sortie 6b dans un moyen de décantation 13, par exemple un bac, en même temps qu'un produit floculant, facilitant la séparation des hydrocarbures de l'eau. Ce produit floculant est stocké au 11 et injecté en ligne par la pompe 12.

La sousverse de l'hydrocyclone (6), constituée par un mélange eau-sable enrichi en sable, et dont l'eau contient des hydrocarbures en suspension s'écoule par un deuxième trou de sortie 6c dans la deuxième cuve 7 où elle est diluée par une partie de l'eau déshuilée, recyclée du bac 13 par la pompe 14 et par les égouttures du tamis vibrant 10 qui est placé sous le cyclone 9. Ce dernier est alimenté par la cuve 7 dont une quatrième sortie 7a est connectée à la deuxième entrée 9a du cyclone 9 par l'intermédiaire d'une pompe 8.

La sousverse du cyclone 9 s'écoule du quatrième trou de sortie 9c; elle contient une eau dont la concentration en hydrocarbures est très faible puisqu'ils ont été dilués dans les deux cyclones 6 et 9. Elle contient aussi le sable lavé qui est recueilli après son passage sur le tamis vibrant 10.

La surverse de cyclone (9) correspondant à de l'eau légèrement polluée est envoyée par le troisième trou 9b à la première cuve (4) comme déjà indiqué, par la simple action de la gravité.

Il est utile de préciser que le passage dans le deuxième hydrocyclone tend à parfaire le rinçage des sédiments.

La répartition de l'eau en circulation dans l'ensemble du système est ajustée de façon à avoir le rapport eau/sable convenable dans le tube malaxeur et défini plus haut ainsi qu'un rapport eau/sable dans chaque cyclone compris entre 2 et 15 et de préférence entre 3 et 8.

Les hydrocarbures surnageants déplacés du sable sont récupérés à la surface du bac 13 par un déversoir ou tout système mécanique d'écrémage. Les flocs plus denses que l'eau qui se forment éventuellement sont éliminés par la vanne de fond du bac 13.

La partie de l'eau du bac 13 qui n'est pas renvoyée dans la deuxième cuve 7 comme indiqué plus haut peut être recyclée comme alimentation en eau du tube malaxeur après avoir été mélangée avec de l'eau d'appoint dans le récipient 15.

Les cuves 4 et 7 sont équipées de goulottes permettant d'évacuer les hydrocarbures surnageants qui peuvent se séparer.

Lorsque les hydrocarbures à déplacer du sable sont très visqueux ou lorsque, pour des raisons diverses, l'adsorption des hydrocarbures sur le sable a été exacerbée, par exemple par des phénomènes de

vieillissement à l'air, il peut être nécessaire d'effectuer le lavage à une température supérieure à la température ambiante, cette température restant toutefois au plus égale à environ 80°C pour des raisons économiques. Dans ce cas l'eau est envoyée grâce à une pompe 16 de la cuve 15 à l'unité de lavage (2) en passant par un échangeur de chaleur (17) qui peut être, par exemple, un échangeur à plaques alimenté par la vapeur produite par une chaudière.

Selon un mode avantageux de mise en oeuvre du procédé illustré par le trait en pointillé sur le schéma, dans le cas du traitement de charges de sable relativement homogènes, ou lorsque la séparation eau-sable s'effectue facilement (cas par exemple, d'un sable fraichement pollué), on peut ne pas utiliser le cyclone 6. Dans ce cas la surverse de l'hydrocyclone 9 est envoyée par le troisième trou de sortie 9b dans le bac de décantation 13, le cyclone 9 étant alimenté au niveau de la deuxième entrée 9a par la cuve 4. Le mélange s'écoulant du trommel 3 est dilué dans cette cuve 4 par de l'eau épurée du bac 13 et les égouttures du tamis vibrant 10.

La solution générale au problème posé comporte l'utilisation d'un orifice d'entrée ainsi qu'un premier et un deuxième orifices de sortie sur les organes de séparation. En conséquence, on doit noter que dans le cas de l'utilisation des deux cyclones, la première entrée 6a correspond à l'orifice d'entrée et le premier trou de sortie 6b, puis le quatrième trou de sortie 9c correspondent respectivement au premier et au second orifice de sortie. Au contraire, dans le cas de l'utilisation d'un seul hydrocyclone 9 ce sont respectivement les troisième 9b et quatrième trous 9c de sortie qui équivalent au premier et au second orifices de sortie alors que la deuxième entrée 9a correspond à l'orifice d'entrée.

L'application du procédé tel que décrit ci-dessus permet de traiter efficacement du sable fraichement pollué par des hydrocarbures de viscosité relativement faible, en pratique inférieure à environ 1000 mPa.s. Dans le cas de sables pollués par des hydrocarbures plus visqueux, ou lorsque le sable pollué a été soumis pendant plusieurs jours à des processus de vieillissement à l'air, l'efficacité du procédé est améliorée par l'utilisation d'une phase liquide désorbante comprenant au moins un produit de lavage introduit à l'entrée du tube malaxeur (2) avec l'eau issu de la cuve 15 à partir de la capacité (18) au moyen d'une pompe doseuse 19.

Dans le cas où l'on utilise un produit de lavage, la proportion de celui-ci par rapport au sable est comprise entre 0,5 et 5 % en poids et de préférence entre 1 et 3 %.

Selon l'invention, la composition de produit de lavage est constituée par un mélange d'un ou plusieurs composés tensio-actifs et d'un solvant miscible avec les hydrocarbures à déplacer du sable, la proportion du/des tensioactifs dans le mélange étant comprise entre 3 et 50 % en poids, une valeur comprise entre 10 et 30 % étant généralement efficace et économiquement acceptable. La proportion du solvant dans le produit de lavage peut alors atteindre 50 à 97 %.

Il a été trouvé avantageux de choisir le/les tensioactifs parmi les dérivés oxyalkylés d'amines ou diamines grasses de formules respectives

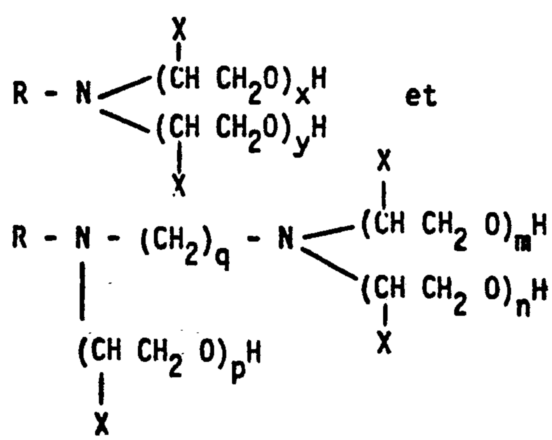
et

dans lesquelles X est un atome d'hydrogène et/ou un radical méthyle, R est une chaîne linéaire aliphatique comprenant de 12 à 22 atomes de carbone, les sommes (x + y) et (m + n + p) varient chacune de 2 à 15, et q varie de 2 à 6.

Les composés tensioactifs utilisés selon la présente invention sont des dérivés éthoxylés (X étant un atome d'hydrogène) d'amines ou diamines pures ou de mélanges d'amines ou diamines dont la chaîne grasse comprend des nombres d'atomes de carbone différents.

A titre d'exemples, on citera les dérivés éthoxylés de la laurylamine, de l'oléylamine, de la N-laurylpropylènediamine, de la N-oléylpropylènediamine, des mélanges d'amines fabriqués à partir d'huiles végétales ou animales telles que le coprah, le colza ou le suif, les chaînes grasses linéaires pouvant être partiellement ou complètement hydrogénées.

Le solvant qui peut être utilisé seul ou en mélange avec les composés tensioactifs pour constituer le produit de lavage est un mélange d'hydrocarbures comprenant par exemple une coupe pétrolière de distillation dont le point initial est d'au moins 150°C et le point final d'au plus 300°C (par exemple un kérosène 200 - 250°C). La teneur de ces coupes en hydrocarbures aromatiques n'étant pas un paramètre essentiel du point de vue de l'efficacité du lavage, on aura intérêt à utiliser une coupe peu aromatique pour limiter la toxicité due aux traces

de solvant restant sur le sable, dans le cas où celui-ci est remis en place sur une plage après lavage.

Il a été également découvert qu'il est avantageux d'ajouter à la phase liquide désorbante, en plus du produit de lavage, un agent alcalin permettant de modifier le pH du mélange. Il peut être introduit par exemple avec le sable sur la bande transporteuse 1, à une dose allant de 0,1 jusqu'à 5 % en poids par rapport au sable et de préférence de 1 à 3 %. Avantageusement, on peut utiliser comme agent alcalin du carbonate de sodium.

L'invention est illustrée par les exemples suivants:

**Exemple 1**

On utilise une installation conforme à la description donnée ci- dessus et schématisée sur la planche 1, dont les divers éléments sont dimensionnés pour traiter en continu 400 kg/h de sable de plage de granulométrie comprise entre 0,1 et 10 mm, contenant 5 % d'eau et fraichement pollué par un résidu de pétrole léger (60 mPa.s à 20° C) à raison de 27 g/kg de sable.

Le temps de séjour moyen du sable dans le tube malaxeur, qui tourne autour de son axe à 16 t/mn est de 9 mn.

Le tube est alimenté en eau douce à 22° C à un débit de 280 l/h dont une partie est de l'eau recyclée de la cuve de décantation.

Les deux hydrocyclones fonctionnent avec un rapport pondéral eau/sable de 3,5.

Le sable sortant de l'installation ne contient plus que 0,8 g d'hydrocarbures par kg de sable, soit un rendement de lavage voisin de 97 %.

**Exemple 2**

On utilise la même installation que dans l'exemple 1 pour traiter dans les mêmes conditions opératoires du sable de mêmes caractéristiques, contenant 4,5 % d'eau et fraichement pollué par du fuel lourd (8000 mPa.s à 20° C), à raison de 25 g/kg de sable.

Le sable sortant de l'installation contient 16 g de fuel par kg, soit un rendement de lavage de 36 %.

**Exemple 3**

On reproduit l'essai de l'exemple 2, mais en chauffant l'eau introduite dans le tube malaxeur à 50° C.

Le sable sortant de l'installation contient 9 g de fuel par kg de sable, soit un rendement de lavage de 64 %.

Cet exemple montre l'intérêt d'effectuer le lavage à une température plus élevée.

**Exemple 4**

On utilise la même installation que dans l'exemple 1 pour traiter, dans des conditions opératoires identiques à celles de l'exemple 3, un lot de sable identique à celui de l'exemple 3 mais qui a été laissé à l'air en couche de 1 cm pendant 10 jours.

Le sable sortant de l'installation contient 17 g de fuel par kg de sable, soit un rendement de lavage de 32 %.

**Exemple 5**

On reproduit l'essai de l'exemple 4, en introduisant dans le tube malaxeur en même temps que l'eau, une composition de lavage, à un débit de 8 l/h, constituée par un mélange de 80 % en poids d'une coupe pétrolière correspondant à du kérosène et de 20 % en poids d'amines de coprah éthoxylées par 5 moles d'oxyde d'éthylène par mole d'amine en moyenne.

Le sable sortant de l'installation contient 3,2 g de fuel par kg de sable, soit un rendement de lavage de 87,2 %.

**Exemple 6**

On reproduit l'exemple 5 en introduisant dans le tube malaxeur, avec le sable, du carbonate de sodium en poudre à raison de 3 kg/h.

Le sable sortant de l'installation contient 1,9 g de fuel par kg de sable, soit un rendement de lavage de 92,4 %.

**Exemple 7**

On reproduit l'exemple 3 en utilisant la formulation de lavage de l'exemple 5.

Le sable sortant de l'installation contient 2,25 g de fuel par kg de sable soit un rendement de lavage de 91 %.

Les exemples 5, 6, 7 et 8 montrent l'avantage d'utiliser une formulation de lavage selon l'invention pour traiter un sable pollué qui a été soumis à un processus de vieillissement.

**Exemple 8**

On reproduit l'exemple 7 en introduisant dans le tube malaxeur, avec le sable, du carbonate de sodium en poudre à raison de 2,5 kg/l.

Le sable sortant de l'installation contient 1 g de fuel par kg de sable, soit un rendement de lavage de 96 %.

Le procédé et dispositif selon l'invention ainsi décrits visent à traiter par exemple 20 à 30 tonnes/heure de sédiments pollués.

**Revendications**

1. Procédé utilisable pour laver des produits solides constitués de mélanges de granulométrie hétérogène imprégnés de substances indésirables, tels qu'un mélange de sable et de gravier contenant des hydrocarbures, comportant le lavage de ces produits par une phase liquide capable de désorber ces hydrocarbures, caractérisé par la combinaison des étapes suivantes:

a) on met en contact ces produits avec une phase liquide contenant une solution désorbante pour former un mélange constitué par la solution, les hydrocarbures désorbés et les produits lavés,
b) on élimine les graviers lavés dudit mélange,
c) on effectue au moins une étape de séparation notamment par cyclonage sur ledit mélange débarrassé des graviers, cette séparation délivrant une surverse qui comporte au moins la majeure partie des hydrocarbures et une sousverse qui comporte au moins la majeure partie du sable lavé, et
d) on sépare la surverse par décantation et on récupère d'une part les hydrocarbures et d'autre part une phase aqueuse,

et en ce que l'on utilise comme phase liquide désorbante une composition comprenant de l'eau additionnée d'un produit de lavage dans une proportion de 0,5 à 5 % et de préférence de 1 à 3 % en poids par rapport au sable et d'un agent alcalin de 0,1 à 5 % et de préférence de 1 à 3 % en poids par rapport au sable.

2. Procédé selon la revendication 1, caractérisé en ce que l'on soumet la sousverse de l'étape c) à une seconde étape de séparation notamment par cyclonage et l'on recueille une deuxième surverse qui est réintroduite avec le mélange résultant de l'étape b), ainsi qu'une deuxième sousverse dont on récupère le sable lavé et une phase aqueuse déshuilée, que l'on ajoute à la sousverse de l'étape c).

3. Procédé selon les revendications 1 et 2, caractérisé en ce que l'on envoie le mélange résultant de l'étape b) dans une première cuve où il est dilué par une partie au moins de la sousverse de l'étape c), et/ou par une partie au moins de la deuxième surverse et/ou par une partie au moins de la phase aqueuse de l'étape d).

4. Procédé selon la revendication 2, caractérisé en ce que l'on envoie la sousverse de l'étape c) dans une deuxième cuve où elle est diluée par une partie au moins de la phase aqueuse déshuilée de la deuxième sousverse et/ou une partie au moins de la phase aqueuse de l'étape d).

5. Procédé selon la revendication 1, caractérisé en ce que l'on ajoute un produit floculant à la surverse de l'étape c) pour faciliter sa séparation en hydrocarbures et eau.

6. Procédé selon l'une quelconque des revendications 1 à 5, caractérisé en ce que ladite phase liquide désorbante est utilisée dans un rapport pondéral de 0,25 à 5 et de préférence de 0,5 à 2 par rapport au sable.

7. Procédé selon la revendication 1, caractérisé en ce que la phase aqueuse résultant de l'étape d) est réintroduite au moins en partie dans l'étape a) avec une eau d'appoint douce ou salée pour constituer ladite phase liquide désorbante.

8. Procédé selon l'une quelconque des revendications 1 à 7, caractérisé en ce que l'on utilise comme phase

liquide désorbante de l'eau chauffée à une température au plus égale à 80° C.

9. Procédé selon l'une des revendications 1 à 8, caractérisé en ce que l'agent alcalin est du carbonate de sodium.

10. Procédé selon l'une des revendications 1 à 8, caractérisé en ce que l'on utilise comme produit de lavage un mélange comprenant au moins un tensioactif dans une proportion de 3 à 50 % et de préférence de 10 à 30 % en poids par rapport au mélange et d'au moins un solvant d'hydrocarbures dans une proportion de 50 à 97 % en poids par rapport au mélange.

11. Procédé selon la revendication 10, caractérisé en ce que l'on utilise comme tensioactif un dérivé oxyalkylé d'amines ou diamines de formules respectives:

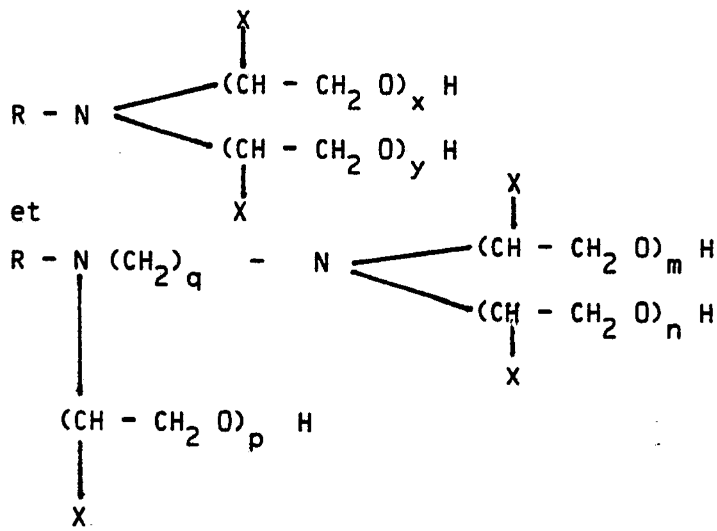
et

dans lesquelles R est une chaîne aliphatique linéaire comprenant de 12 à 22 atomes de carbone, les sommes (x + y, et (m + n + p) varient chacune de 2 à 15, q varie de 2 à 6, et X est un atome d'hydrogène et/ou un radical méthyle.

12. Procédé selon la revendication 10, caractérisé en ce que l'on utilise comme dérivé oxyalkylé d'amines ou diamines un dérivé éthoxylé.

13. Procédé selon la revendication 10, caractérisé en ce que l'on utilise comme solvant d'hydrocarbures une coupe pétrolière de distillation dont le point initial est d'au moins 150° C et le point final d'au plus 300° C.

14. Dispositif utilisable pour la mise en oeuvre du procédé selon la revendication 1, caractérisé en ce qu'il comporte en combinaison:

- un organe malaxeur débourbeur pour laver et désorber les produits solides contenant les hydrocarbures, se prolongeant par un moyen de tamisage ayant une première sortie pour éliminer les graviers lavés et une seconde sortie pour récupérer le mélange lavé et désorbé qui est débarrassé des graviers,
- au moins un organe de séparation, ayant un orifice d'entrée connecté à la seconde sortie dudit moyen de tamisage pour délivrer par un premier orifice de sortie une surverse qui comporte au moins la majeure partie des hydrocarbures et par un second orifice de sortie, une sousverse qui comporte au moins la majeure partie du sable lavé,

et

- un moyen de décantation relié au premier orifice de sortie dudit organe de séparation pour décanter la surverse et récupérer d'une part les hydrocarbures surnageants et floculés et d'autre part la phase aqueuse.

15. Composition utilisable pour la mise en oeuvre d'un procédé utilisable pour laver des produits solides constitués de mélanges de granulométrie hétérogène imprégnés de substances indésirables, tels qu'un mélange de sable et de gravier contenant des hydrocarbures, comportant le lavage de ces produits par une phase liquide capable de désorber ces hydrocarbures, ainsi que la combinaison des étapes suivantes:

a) on met en contact ces produits avec une phase liquide contenant une solution désorbante pour former un mélange constitué par la solution, les hydrocarbures désorbés et les produits lavés,
b) on élimine les graviers lavés dudit mélange,
c) on effectue au moins une étape de séparation notamment par cyclonage sur ledit mélange débarrassé des graviers, cette séparation délivrant une surverse qui comporte au moins la majeure partie des hydrocarbures et une sousverse qui comporte au moins la majeure partie du sable lavé, et
d) on sépare la surverse par décantation et on récupère d'une part les hydrocarbures et d'autre part une phase aqueuse,

caractérisé en ce qu'elle contient de 71 à 99,9 % d'eau, de 0,05 % à 17 % de solvant d'hydrocarbures, de 0,03 à 8 % de tensioactif oxyalkylé d'amines ou diamines et de 0,02 à 16 % d'un agent alcalin.

**Patentansprüche**

1. Verfahren zum Waschen von festen Materialien, die aus Mischungen heterogener Granulometrie bestehen und mit unerwünschten Substanzen wie einem Gemisch aus Sand und Kohlenwasserstoff enthaltendem Kiessand imprägniert sind, und diese Materialien mittels einer flüssigen Phase gewaschen werden, die in der Lage ist, diese Kohlenwasserstoffe zu desorbieren, gekennzeichnet durch die Kombination der folgenden Stufen:

a) man kontaktiert diese Produkte mit einer flüssigen eine desorbierende Lösung enthaltenden Phase zur Bildung eines Gemisches, welches gebildet wird durch die Lösung, die desorbierten Kohlenwasserstoffe sowie die gewaschenen Produkte,
b) man beseitigt die gewaschenen Kiessände aus diesem Gemisch,
c) man führt wenigstens eine Trennstufe, insbesondere durch Zyklonbehandlung am von diesen Kiessänden befreitem Gemisch durch, wobei bei diesem Trennvorgang ein Kopfablauf, der wenigstens den grösseren Teil der Kohlenwasserstoffe enthält sowie ein Bodenablauf, der wenigstens den grösseren Teil des gewaschenen Sandes enthält, anfällt, und
d) man reinigt den Kopfablauf durch Dekantieren und gewinnt einerseits die Kohlenwasserstoffe und andererseits eine wässrige Phase,

und man verwendet als flüssige desorbierende Phase eine Zusammensetzung, die Wasser unter Zusatz eines Waschproduktes in einem Anteil von 0,5 bis 5 %, vorzugsweise 1 bis 3 Gew.-% bezogen auf den Sand sowie ein alkalines Mittel mit 0,1 bis 5 % vorzugsweise 1 bis 3 Gew.-% bezogen auf den Sand enthält.

2. Verfahren nach Anspruch 1, dadurch gekennzeichnet, daß man den Bodenablauf der Stufe c) einer zweiten Trennstufe insbesondere durch Zyklonbehandlung aussetzt und einen zweiten Bodenablauf sammelt, der wieder mit dem aus der Stufe b) kommenden Gemisch eingeführt wird sowie einen zweiten Bodenablauf, von dem man den gewaschenen Sand und eine wässrige, entölte Phase gewinnt, die man dem Bodenablauf der Stufe c) zusetzt.

3. Verfahren nach einem der Ansprüche 1 und 2, dadurch gekennzeichnet, daß man das aus der Stufe b) kommende Gemisch in eine erste Wanne gibt, wo es wenigstens von einem Teil des Bodenablaufs der Stufe c) und/oder wenigstens einem Teil des zweiten Kopfablaufs und/oder von wenigstens einem Teil der wässrigen Phase der Stufe d) verdünnt wird.

4. Verfahren nach Anspruch 2, dadurch gekennzeichnet, daß man den Bodenablauf der Stufe c) in eine zweite Wanne gibt, wo er durch wenigstens einen Teil der wässrigen entölten Phase des zweiten Bodenablaufs und/oder wenigstens einen Teil der wässrigen Phase der Stufe d) verdünnt wird.

5. Verfahren nach Anspruch 1, dadurch gekennzeichnet, daß man ein Flockulierungsprodukt auf den Kopfablauf der Stufe c) gibt, um die Trennung in Kohlenwasserstoffe und Wasser zu erleichtern.

6. Verfahren nach einem der Ansprüche 1 bis 5, dadurch gekennzeichnet, daß diese desorbierende Flüssigphase in einem Gewichtsverhältnis von 0,25 bis 5, vorzugsweise 0,5 bis 2 bezogen auf den Sand verwendet wird.

7. Verfahren nach Anspruch 1, dadurch gekennzeichnet, daß die aus der Stufe d) stammende wässrige Phase wenigstens zum Teil wieder in die Stufe a) mit einer Salzwasser- oder Süßwasserzugabe eingeführt wird, um diese desorbierende flüssige Phase zu bilden.

8. Verfahren nach einem der Ansprüche 1 bis 7, dadurch gekennzeichnet, daß man als flüssige desorbierende Phase heisses Wasser bei einer Temperatur von höchstens 80° C verwendet.

9. Verfahren nach einem der Ansprüche 1 bis 8, dadurch gekennzeichnet, daß das alkaline Mittel Natriumcarbonat ist.

10. Verfahren nach einem der Ansprüche 1 bis 8, dadurch gekennzeichnet, daß man als Waschmittel ein Gemisch mit wenigstens einem spannungsaktiven Mittel in einem Anteil von 3 bis 50, vorzugsweise 10 bis 30 Gew.-% bezogen auf das Gemisch und wenigstens einem Kohlenwasserstoff-Lösungsmittel in einem Anteil von 50 bis 97 Gew.-% bezogen auf das Gemisch, verwendet.

11. Verfahren nach Anspruch 10, dadurch gekennzeichnet, daß man als spannungsaktives Mittel ein oxalkyliertes Aminderivat oder Diaminderivat der folgenden Formeln verwendet:

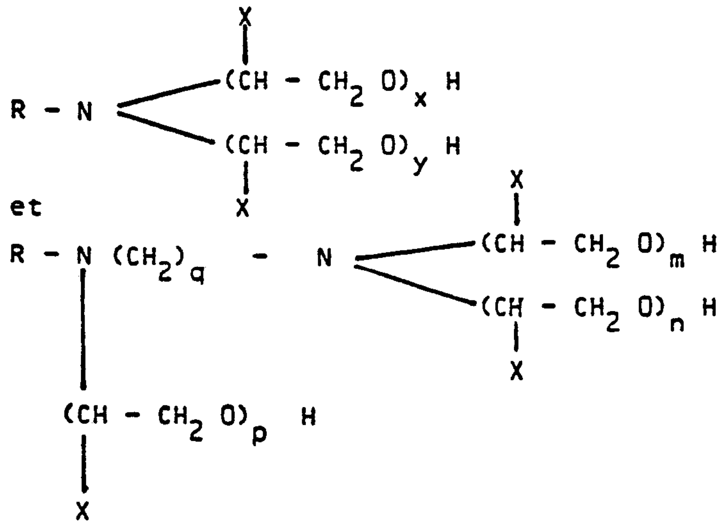

et

wobei R eine aliphatische lineare Kette mit 12 bis 22 Kohlenstoffatomen ist und die Summe von (x + y) und (m + n + p) jeweils von 2 bis 15 variiert, q von 2 bis 6 variiert und X ein Wasserstoffatom und/oder ein Methylrest ist.

12. Verfahren nach Anspruch 10, dadurch gekennzeichnet, daß man als oxalkyliertes Amin- oder Diaminderivat ein äthoxyliertes Derivat verwendet.

13. Verfahren nach Anspruch 10, dadurch gekennzeichnet, daß man als Wasserstofflösungsmittel einen Erdöldestillationsschnitt verwendet, dessen Anfangspunkt bei wenigstens 150°C, dessen Endpunkt bei höchstens 300°C liegt.

14. Vorrichtung zur Durchführung des Verfahrens nach Anspruch 1, gekennzeichnet in Kombination durch:

- ein Wasch-Knetorgan um Waschen und desorbieren der festen, die Kohlenwasserstoffe enthaltenden Produkte, verlängert durch eine Siebeinrichtung mit einem ersten Ausgang zum Entfernen der gewaschenen Kiessände und einem zweiten Ausgang zum Rückgewinnen des gewaschenen und desorbierten von den Kiessänden befreiten Gemisches,
- wenigstens ein Trennorgan mit einer Eingangsöffnung, die mit dem zweiten Ausgang dieser Siebeinrichtung verbunden ist, um über eine erste Ausgangsöffnung einen Kopfablauf zu liefern, der wenigstens den grösseren Teil der Kohlenwasserstoffe enthält und über eine Ausgangsöffnung einen Bodenablauf zu liefern, der wenigstens den grösseren Teil des gewaschenen Sandes enthält, und
- eine Dekantiereinrichtung, die mit der ersten Ausgangsöffnung dieses Trennorgans verbunden ist, um den Kopfablauf zu dekantieren und einerseits die auf schwimmenden flockulierten Kohlenwasserstoffe und andererseits die wässrige Phase zu gewinnen.

15. Zur Durchführung eines Verfahrens zum Waschen der festen Produkte verwendbare Zusammensetzung, wobei diese gebildet werden aus Gemischen heterogener Granulometrie, die mit unerwünschten Substanzen imprägniert sind, beispielsweise einem Kohlenwasserstoffe enthaltenden Sand- und Kies-Sand-Gemisch, unter Waschen dieser Produkte vermittels einer flüssigen Phase, die in der Lage ist, diese Kohlenwasserstoffe zu desorbieren sowie durch die Kombination der folgenden Stufen:

a) man kontaktiert diese Produkte mit einer flüssigen, eine desorbierende Phase enthaltenden Lösung zur Bildung eines Gemisches, welches gebildet ist durch die Lösung, die desorbierten Wasserstoffe und die gewaschenen Produkte,
b) man eliminiert die gewaschenen Kiessände aus diesem Gemisch,
c) es wird wenigstens eine Trennstufe, insbesondere mittels Zyklonbehandlung an diesem vom Kiessand befreiten Gemisch zur Anwendung gebracht, wobei diese Trennung einen Kopfablauf, der wenigstens den grösseren Teil der Kohlenwasserstoffe umfasst sowie einen Bodenablauf liefert, der wenigstens den grösseren Teil des gewaschenen Sandes umfasst, und
d) man trennt den Kopfablauf durch Dekantieren und gewinnt einerseits die Kohlenwasserstoffe, andererseits eine wässrige Phase zurück

dadurch gekennzeichnet, daß sie 71 bis 99,9 % Wasser, 0,05 bis 17 % Kohlenwasserstoff-Lösungsmittel, zwischen 0,03 und 8 % spannungsaktives Mittel aus oxalkylierten Aminen oder Diaminen sowie 0,02 bis 16 % eines alkalinen Mittels enthält.

**Claims**

1. A method which can be used to wash solid products constituted by mixtures of heterogeneous grain size impregnated with undesirable substances, such as a mixture of sand and gravel containing hydrocarbons, comprising washing these products with a liquid phase capable of desorbing these hydrocarbons, characterized by combination of the following stages:

a) these products are brought into contact with a liquid phase containing a desorbing solution in order to form a mixture constituted by the solution, the desorbed hydrocarbons and the washed products,
b) the washed gravels are removed from said mixture,
c) at least one separation stage is completed in particular by cycloning said gravel-free mixture, this separation providing an overflow which comprises at least the major part of the hydrocarbons, and an underflow which comprises at the least the major part of the washed sand, and
d) the overflow is is separated by decanting and the hydrocarbons are recovered on the one hand and an aqueous phase on the other,

and in that the desorbing liquid phase used is a composition comprising water plus a washing product in a proportion of 0,5 to 5 % and preferably 1 to 3 % by weight relative to the sand and an alkaline agent in a proportion of 0,1 to 5 % and preferably 1 to 3 % by weight relative to the sand.

2. A method as in claim 1, characterized in that the underflow from stage c) is subjected to a second separation stage in particular by cycloning, and a second overflow is collected and reintroduced with the mixture resulting from stage b), together with a second underflow from which the washed sand and a de-oiled aqueous phase are recovered and which is added to the underflow from stage c).

3. A method as in claims 1 and 2, characterized in that the mixture resulting from stage b) is sent to a first tank in which it is diluted with at least part of the underflow from stage c) and/or with at least part of the second overflow and/or with at least part of the aqueous phase from stage d).

4. A method as in claim 2, characterized in that the underflow from stage c) is sent to a second tank in which it is diluted with at least part of the de-oiled aqueous phase of the second underflow and/or at least part of the aqueous phase from stage d).

5. A method as in claim 1, characterized in that a flocculating product is added to the overflow from stage c) to facilitate its separation into hydrocarbons and water.

6. A method as in any one of claims 1 to 5, characterized in that said desorbing liquid phase is used in a ratio of 0,25 to 5 and preferably 0,5 to 2 by weight relative to the sand.

7. A method as in claim 1, characterized in that the aqueous phase resulting from stage d) is reintroduced in part at least in stage a) with added fresh or salt water to form said desorbing liquid phase.

8. A method as in any one of claims 1 to 7, characterized in that water heated to a temperature of at most 80°C is used as the desorbing liquid phase.

9. A method as in one of claims 1 to 8, characterized in that the alkaline agent is sodium carbonate.

10. A method as in one of claims 1 to 8, characterized in that the washing product used is a mixture comprising at least one surfactant in a proportion of 3 to 50 % and preferably 10 to 30 % by weight relative to the mixture and at least one hydrocarbon solvent in a proportion of 50 to 97 % by weight relative to the mixture.

11. A method as in claim 10, characterized in that the surfactant used is an oxyalkylated amine or diamine derivative with the respective formulae:

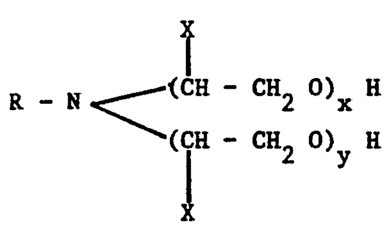

and

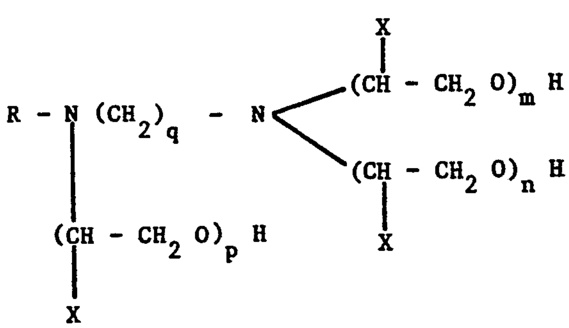

in which R is a linear aliphatic chain comprising 12 to 22 carbon atoms, each of the sums (x + y) and (m + n + p) varies from 2 to 15, q varies from 2 to 6, and X is a hydrogen atom and/or a methyl radical.

12. A method as in claim 10, characterized in that the oxyalkylated amine or diamine derivative used is an ethoxylated derivative.

13. A method as in claim 10, characterized in that the hydrocarbon solvent used is a petroleum distillation cut the initial point of which is at least 150° C and the final point of which is at most 300° C.

14. A device which can be used to implement the method as in claim 1, characterized in that it comprises a combination of:

- a mixing and scouring unit to wash and desorb the solid products containing the hydrocarbons, extended by a sieving means having a first outlet for removal of the washed gravels and a second outlet for recovery of the washed and desorbed mixture which is freed of the gravels,
- at least one separating unit having an inlet orifice connected to the second outlet of said sieving means to deliver an overflow comprising at least the major part of the hydrocarbons through a first outlet orifice and an underflow comprising at least the major part of the washed sand through a second outlet orifice, and
- a decanting means connected to the first outlet orifice of said separating unit to decant the overflow and recover the supernatant flocculated hydrocarbons on the one hand and the aqueous phase on the other.

15. A composition which can be used to implement a method which can be used to wash solid products constituted by mixtures of heterogeneous grain size impregnated with undesirable substances, such as a mixture of sand and gravel containing hydrocarbons, comprising washing these products with a liquid phase capable of desorbing these hydrocarbons, and combination of the following stages:

a) these products are brought into contact with a liquid phase containing a desorbing solution to form a mixture constituted by the solution, the desorbed hydrocarbons and the washed products,
b) the washed gravels are removed from said mixture,
c) at least one separation stage is carried out in particular by cycloning said gravel-free mixture, this separation delivering an overflow which comprises at least the major part of the hydrocarbons and an underflow which comprises at least the major part of the washed sand, and
d) the overflow is separated by decanting and the hydrocarbons are recovered on the one hand and an aqueous phase on the other,

characterized in that it contains 71 to 99.9 % of water, 0,05 % to 17 % of hydrocarbon solvent, 0,03 to 8 % of oxyalkylated amine or diamine surfactant and 0,02 to 16 % of an alkaline agent.

PL. unique

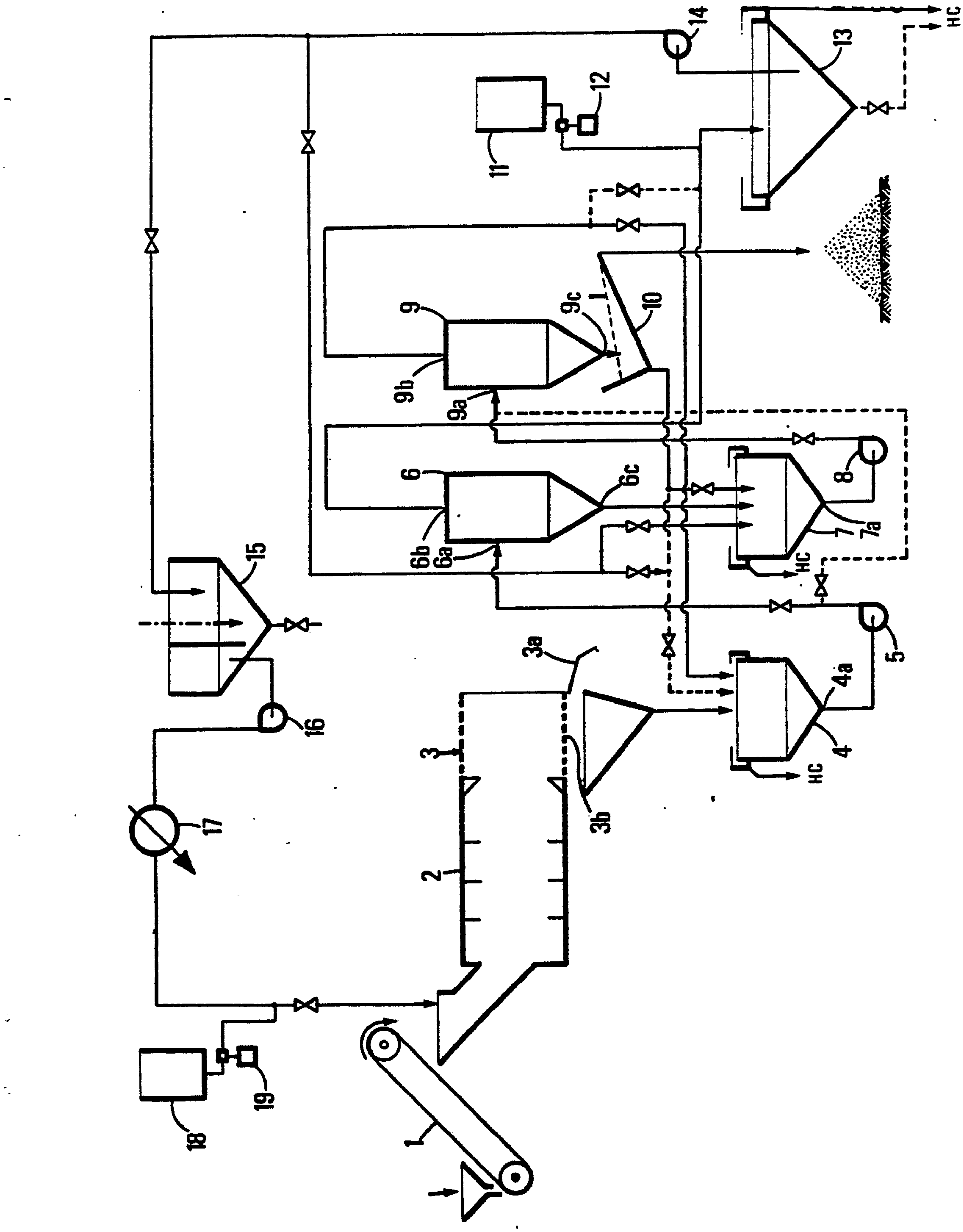
1
2
3
3a
3b
4
4a
5
6
6a
6b
6c
7
7a
8
9
9a
9b
9c
10
11
12
13
14
15
16
17
18
19
HC